# EUROPEAN PATENT APPLICATION

(11) **EP 1 201 981 A1**
(43) Date of publication of application: **02.05.2002**
(21) Application number: 01124510.7
(22) Date of filing: 12.10.2001
(51) Int. Cl.: F16L 11/11, F16L 51/03, F16L 25/00

(54) **Outlet hose construction for electric household appliances such as washing machines, dish-washers and the like**

(30) Priority: 25.10.2000 IT MI002313
(71) Applicant: Tamborini, Ariberto, 21020 Daverio (Varese) (IT); Tamborini, Giancarlo, 21020 Daverio (Varese) (IT)
(72) Inventor: Tamborini, Ariberto, 21020 Daverio (Varese) (IT); Tamborini, Giancarlo, 21020 Daverio (Varese) (IT)
(74) Representative: Cicogna, Franco

(57) **Abstract**

An outlet hose construction, specifically designed for household appliances such as washing machines, dish-washers and the like, comprises a corrugated pipe (1) having a first end portion including a sleeve to be connected to an outlet of a household appliance and a second end portion having an outlet sleeve to be connected to an outlet means, and being characterized in that said outlet hose construction comprises at least an extensible and orientable bellows (3,4,6) portion.

## Description

### BACKGROUND OF THE INVENTION

The present invention relates to an outlet hose construction, which has been specifically designed for electric household appliances, such as washing machines, dish-washers and the like.

As known, outlet hoses for washing machines, dish-washers and the like conventionally comprise at least a corrugated tubular element, made of a rigid material, and having two end portions including comparatively soft sleeves, which are applied by overmolding operations, so as to allow the tubular element to be fitted to the outlet or inlet portions of the related electric household appliances.

The above disclosed construction has a comparatively high making cost, since the overmolding operation is comparaively slow and requires complex and expensive overmolding apparatus; thus, the Applicant of the present invention has already proposed, in a previous Italian industrial invention patent application No. MI97A000668, an outlet hose construction, of very simple structure comprising, at the end portions thereof, substantially cylindric portions inside which separately made soft material sleeve elements can be fitted.

However, a drawback of at present made pipes or hoses, is that it is necessary to provide a specifically dimensioned pipe or hose, for each intended application.

For example, each washing machine, or dish-washers, is provided with an outlet pump rubber supporting element spaced at a different distance and orientation with respect to the rear panel of the machine.

Moreover, that portion of the corrugated pipe extending outside of the machine, up to the outlet thereof, consisting, for example, of an edge of the linen washing basin, or other outlet basin, must be specifically fitted by bending operations, or using extension pipe portions.

From a mere production standpoint, the requirements of providing a lot of different outlet pipes for different machines causes storing problems, and, sometimes, a stop of the making operations if a pipe designed for a making line is lacking.

### SUMMARY OF THE INVENTION

Accordingly, the aim of the present invention is to provide such an outlet hose construction, specifically designed for electric household appliances, such as washing machines, dish-washers and the like, which overcomes the above mentioned drawbacks affecting the prior art.

Within the scope of the above mentioned aim, a main object of the present invention is to provide such an outlet hose construction, for washing machines, dish-washers and the like, which is very flexible in operation and can be easily fitted to different types of machines, without requiring any substantial modifications.

Yet another object of present invention is to provide such an outlet hose construction, specifically designed for washing machines, dish-washers and the like, which can be made in a very unexpensive manner and which is very reliable in operation.

According to one aspect of the present invention, the above mentioned aim and objects, as well as yet other objects, which will become more apparent hereinafter, are achieved by an outlet hose construction, specifically designed for washing machines, dish-washers and the like, comprising a corrugated pipe having a first end including a sleeve element to be connected to an outlet of a machine and a second end provided with an outlet sleeve to be connected to an outlet means, said outlet hose construction being characterized in that it further comprises at least an extensible and orientable bellows portion.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of a merely indicative, but not limitative, example, in the accompanying drawings, where:

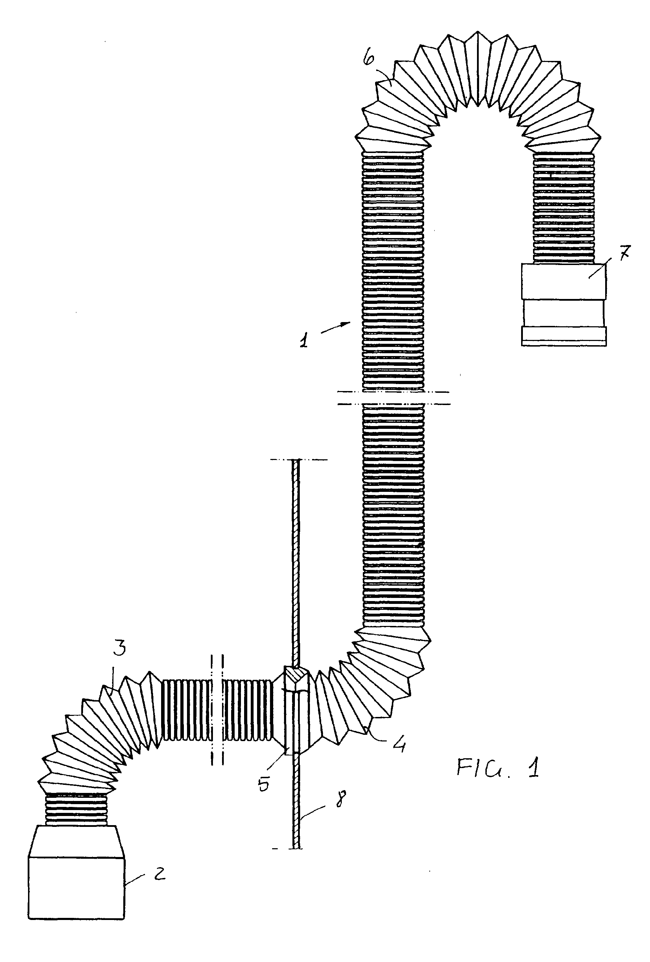

Figure 1 is a broken-away view showing the outlet hose construction according to the present invention;
Figure 2 is a view of an extensible portion of the outlet hose construction, being shown in an unextended condition thereof; and
Figure 3 is a view similar to figure 2 of the extensible portion of the outlet hose construction, according to the invention, being shown in an extended condition thereof.

### DESCRIPTION OF THE PREFERRED EMBODIMENT

With reference to the number references of the above mentioned figures, the hose construction according to the present invention, which has been generally indicated by the reference number 1, comprises a corrugated pipe element, which can be advantageously made by the method disclosed in a prior Italian patent application No. MI97A000668 in the name of the same Applicant.

At one end of the corrugated pipe, a straight sleeve element 2 is overmolded, said sleeve element being for example made of a thermoplastic rubber material, and having an inner diameter designed to be fitted, for example, on the rubber supporting element of the outlet pump of a washing machine or a dish-washer.

As shown, the corrugated pipe 1 comprises, near the sleeve element 2, an orientable and extensible bellows 3, which constitutes an integrating part of the corrugated pipe and allowing the overmolded straight sleeve element 2 to be slanted or tilted at will.

Thus, the mentioned orientable and extensible bellows element 2 allows, according to the invention, to eliminate the conventional bent or curved overmolded sleeve element, which is much more expensive because of the long time necessary for overmolding it and because of the expensive mold which is required for making the sleeve.

The corrugated pipe 1 is moreover provided, at a set region thereof, which can be changed according to the application for which the pipe must be used, with a second bellows element 4, designed for performing a double function: at first it is provided for orienting the hose or pipe outside of the machine, along the machine rear panel 8.

That same second bellows 4, moreover, operates as a support element for a thermoplastic rubber ring 5, which is advantageously separately made by a molding operation and is then assembled on the pipe or hose, for coupling the corrugated pipe or hose 1 to the machine casing, to prevent any undesired vibrations from occurring.

Said corrugated pipe comprises, moreover, a third bellows element 6, designed for replacing the conventional horseshoe end portion usually provided on outlet hoses or pipes to connect said pipe to an edge of the linen washing basin, or other outlet basin.

As shown, the end portion of the corrugated pipe 1 comprises an outlet sleeve 7.

The hose or pipe consruction according to the present invention can be easily fitted to several types of washing machines, by merely adjusting the extensible and orientable bellows elements 3, 4 and 6.

In fact, it should be apparent that the spacing and arrangement of the straight sleeve 2, with respect to the position and orientation of the panel 8 can be easily adjusted, by bending and extending the bellows element 3, which will stably hold the set position.

The second bellows element 4 also allows to properly orient the outer portion of the pipe or hose, so as to orient it toward the outlet position, the third bellows element 6 likewise allowing the pipe or hose to be connected to the edge portion of the linen washing basin, or arranging the outlet sleeve 7 in the most suitable manner and without applying to the pipe any undesired stressing forces.

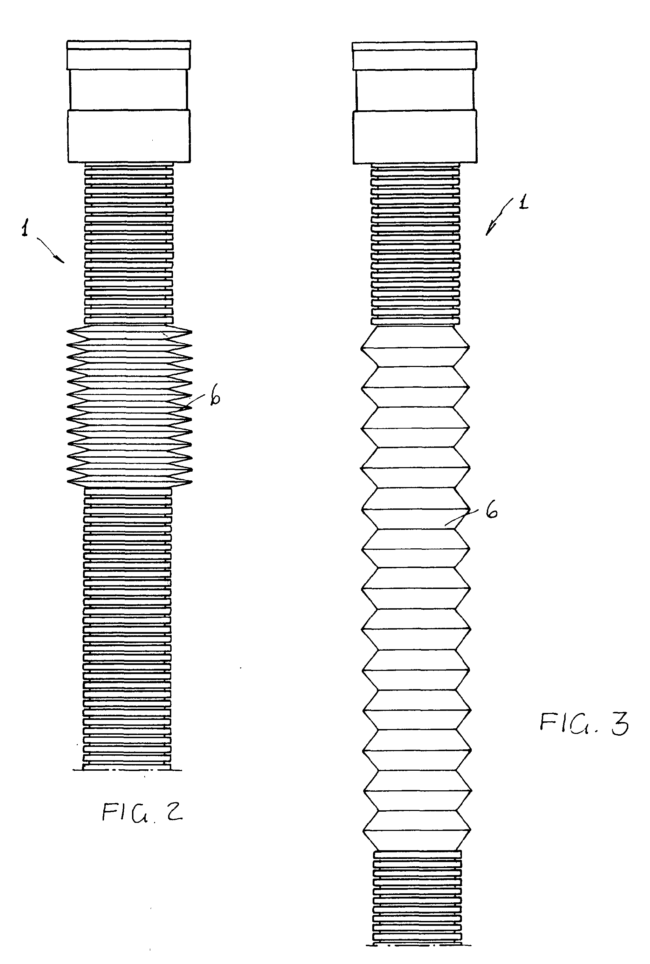

Figures 2 and 3 schematically and indicatively show a possible extension amount of the bellows elements which, advantageously, can properly hold the set position, without any resilient recovering and, accordingly, without stressing the pipe.

It has been found that the invention fully achieves the intended aim and objects.

In fact, an improved corrugated pipe or hose of great utility in washing machines and dish-washers has been provided.

In practicing the invention, the used materials, as well as the contingent size and shapes, can be any, depending on requirements and the status of the art.

## Claims

1. An outlet hose construction, specifically designed for washing machines, dish-washers and the like, comprising a corrugated pipe having a first end including a sleeve element to be connected to an outlet of a machine and a second end provided with an outlet sleeve to be connected to an outlet means, said outlet hose construction being **characterized in that** it further comprises at least an extensible and orientable bellows portion.

2. An outlet hose construction, according to Claim 1, **characterized in that** said hose construction comprises two extensible and orientable bellows portions.

3. An outlet hose construction, according to Claim 1 or 2, **characterized in that** said hose construction comprises three extensible and orientable bellows portions.

4. An outlet hose construction, according to one or more of the preceding claims, **characterized in that** said outlet hose construction comprises a thermoplastic rubber ring element, made by a separate molding method and assembled on said hose, to connect said corrugated pipe to a casing of said machine.

5. An outlet hose construction, according to one or more of the preceding claims, **characterized in that** each of said bellows portions or elements is designed for holding a stable set position thereof.

6. An outlet hose construction, according to one or more of the preceding claims, **characterized in that** said hose construction comprises one or more of the disclosed and/or shown characteristics.
